# EUROPÄISCHE PATENTSCHRIFT

(11) **EP 2 339 280 B1**
(45) Veröffentlichungstag und Bekanntmachung des Hinweises auf die Patenterteilung: **13.07.2016**
(21) Anmeldenummer: 09016011.0
(22) Anmeldetag: 24.12.2009
(51) Int. Cl.: F28D 9/00, F28F 9/00, F28F 3/08

(54) **Kompaktplattenwärmeübertrager**
Compact plate heat transfer device
Échangeur de chaleur compact à plaques

(43) Veröffentlichungstag der Anmeldung: 29.06.2011
(73) Patentinhaber: Caloperm GmbH, 15751 Niederlehme (DE)
(72) Erfinder: Schult, Joachim, 21395 Tespe (DE)
(74) Vertreter: Lippert, Stachow & Partner

(56) Entgegenhaltungen:
- WO-A1-2005/113100
- WO-A2-02/18758
- DE-A1- 2 439 190
- DE-A1- 3 536 316
- DE-T2- 69 302 364
- US-A- 2 343 502
- US-A1- 2003 000 688

## Beschreibung

Die Erfindung betrifft einen Kompaktplattenwärmeübertrager für die Wärmeübertragung zwischen zwei Medien eines gleichen oder unterschiedlichen Aggregatzustandes mit einem Plattenpaket, das aus runden oder rechteckigen profilierten Wärmeübertragungsplatten mit Durchtrittsöffnungen besteht, wobei jeweils zwei aneinander gefügte Wärmeübertragungsplatten am Umfang ihrer Durchtrittsöffnungen gasdicht zu einem Plattenpaar verschweißt sind, die einen Plattenzwischenraum für den mantelseitigen Durchfluss von einem ersten Medium bilden und mindestens zwei aneinander gefügte Plattenpaare an ihrer Peripherie gasdicht zu einem kompakten Plattenpaket verschweißt sind, die einen Plattenzwischenraum für den Durchfluss eine zweiten Mediums über die Durchtrittsöffnungen bilden und wobei das Plattenpaket in einem druckstabilen und gasdicht geschlossenen Gehäusemantel mit Anschlussstutzen eingelagert ist, über die die getrennten Plattenzwischenräume des Plattenpakets von einem ersten Medium mantelseitig und von einem zweiten Medium über die Durchtrittsöffnungen angeströmt werden, wobei das Plattenpaket gemeinsam mit einer vom Anschlussstutzen durchdrungenen und gegenüber dem Plattenpaket gedichteten Endplatte zwischen einer Spannscheibe und einer Mantelplatte des Gehäusemantels mit mindestens zwei am Umfang des Plattenpakets verlaufenden und diagonal gegenüberliegenden Gewindespannelementen verspannt ist, wobei das Plattenpaket von einer am Umfang geschlossenen Mantelschale umgeben ist. Ein derartiger Plattenwärmetauscher ist aus der WO 02/18758 A2 als Abgaswärmetauscher für eine Gasturbine bekannt. Der Plattenstapel des Wärmetauschers ist zwischen zwei Platten frei hängend im Gehäuse mit diesem verschraubt.

Ein weiterer Plattenwärmetauscher ist aus der EP 0 894 233 B1 bekannt. Dieser Plattenwärmetauscher besteht aus einer Anzahl von paarweise am Umfang der Durchtrittsöffnungen verschweißten rechteckigen Wärmeübertragungsplattenpaaren, die an der Peripherie zu einem Plattenpaket verschweißt sind, so dass Plattenzwischenräume entstehen, die von einem Medium mantelseitig und von einem zweiten Medium über die Durchtrittsöffnungen angeströmt werden, die einen Zu- und Ablaufkanal im Plattenpaket bilden, der einseitig geschlossen ist. Das so ausgebildete Plattenpaket ist in einem Gehäuse mit einem mantelseitigen Zu- und Ablauf zu den Plattenzwischenräumen der Plattenpaare und mit einem Zu- und Ablauf zu den Zwischenräumen zwischen den Plattenpaaren eingesetzt. Zwischen dem obersten Plattenpaket und der oberen Wand des Gehäuses ist je ein Verbindungsstück mit einer Öffnung angeordnet, das jeweils koaxial mit dem Zu- und Ablauf des Gehäuses und mit dem durch die Durchtrittsöffnungen der Wärmeübertragungsplatten gebildeten Zu- bzw. Ablaufkanal verläuft. Jedes dieser Verbindungsstücke ist mit der Durchtrittsöffnung des oberen Plattenpaares hart verlötet und weist jeweils zwei Gewindebolzen auf, die sich durch Löcher in der oberen Wand des Gehäuses erstrekken und über die das Plattenpaket mittels Muttern gegen die obere Wand des Gehäuses gezogen wird. Mit der Befestigung des Plattenpakets gegen die Innenfläche der oberen Wand des Gehäuses bleibt die Innenfläche der inneren Wand des Gehäuses als Gegendrucklager für das Plattenpaket unwirksam.
Ein derartig ausgebildeter Plattenwärmeübertrager verfügt nur über eine sehr geringe Druckstabilität und ist damit für den Hochdruckbereich ungeeignet.

Aus der EP 1 936 310 A1 ist ein Kompaktplattenwärmeübertrager mit einem eingangs erwähnten Plattenpaket bekannt, bei dem das Plattenpaket zwischen einer oberen und unteren Gehäuseplatte und den parallel verlaufenden Seitenteilen des Gehäuses mit den Ein- und Austrittsstutzen zu den Plattenzwischenräumen der Plattenpaare metallisch gedichtet verspannt ist, wobei die obere und untere Gehäuseplatte mit den parallel verlaufenden Seitenteilen des Gehäuses zu einem Gehäusemantel verschweißt sind, der beiderseits mit einem Stirnteil mit Anschlussstutzen zu den Plattenzwischenräumen eines Plattenpaares zu einem druckstabilen und gasgedichteten Gehäuse verschlossen sind. Ein derart ausgebildeter Kompaktplattenwärmeübertrager verfügt zwar generell und auch bei sehr hohen Druckdifferenzen in den gebildeten Plattenzwischenräumen über eine sehr hohe Druckstabilität und ist damit auch für den Hochdruck gut geeignet, die im Plattenpaket und im Gehäuse wirkenden Kräfte müssen aber in ihrer Gesamtheit ausschließlich über das Gehäuse aufgenommen werden, wodurch das Gehäuse sehr kompakt ausgelegt werden muss. Darüber hinaus ist dieser Kompaktplattenwärmeübertrager durch den mindestens komplett verschweißten Gehäusemantel nicht sehr servicefreundlich.

Aus der DE 10 2004 004 895 B3 ist ein Wärmeübertrager mit runden profilierten Wärmeübertragungsplatten mit einem einleitend ausgebildeten Plattenpaket bekannt, bei dem das Plattenpaket beiderseits durch Paketspannplatten mit Durchtrittsöffnungen begrenzt ist, über die das Plattenpaket mittels Spannbolzen verspannt ist, die über die Peripherie der Wärmeübertragungsplatten verlaufen und mit den Paketspannplatten verschweißt sind, wobei das Plattenpaket über u-förmige Abwinklungen von Seitenblechen im Gehäusemantel lagestabil eingelagert ist und der Gehäusemantel durch Endplatten mit Anschlussstutzen, die das Plattenpaket seitlich im Gehäuse fixieren, metallisch gedichtet verschlossen ist. Ein derartig ausgebildeter Wärmeübertrager, der für den Hochdruckbereich geeignet ist, ist zum einen sehr aufwendig in der Herstellung und zum anderen auch nicht sehr servicefreundlich. Darüber hinaus müssen auch die im Plattenpaket und im Gehäuse wirkenden Kräfte in ihrer Gesamtheit ausschließlich über das Gehäuse aufgenommen werden, wodurch auch bei diesem Wärmeübertrager das Gehäuse sehr kompakt ausgelegt werden muss.

In der DE 24 39 190 A1 wird ein Blockwärmetauscher mit einem aus mehreren Schüssen bestehenden Mantelrohr, zwei deckelförmigen Spannplatten, zwischen den Spannplatten eingespannten, mit Kanälen versehenen Blöcken sowie Stutzen zur Zu- und Ableitung der wärmeaustauschenden Fluide beschrieben, wobei die Mantelschüsse ebenfalls zwischen den Spannplatten eingespannt sind.

Aus der US 2003/000688 A1 geht ebenfalls ein Wärmetauscher mit Wärmeübertragungsplatten hervor.

Schließlich geht aus der DE 693 02 364 T2 eine Reaktionskammer hervor, die aus zwei Endplatten besteht, wobei an einer der Endplatten ein unverspannter Rippenblock befestigt ist und wobei zwischen den Endplatten der Mantel des Reaktors verspannt ist.

Aufgabe der Erfindung ist es daher, die eingangs genannten Plattenwärmeübertrager dadurch zu verbessern, dass der Gehäusemantel vom wirkenden Innendruck im Gehäuse weitgehend entlastet wird und ein Kompaktwärmeübertrager zur Verfügung gestellt werden kann, der auch für den Hochdruck- und Hochtemperaturbereich sehr wirtschaftlich herstellbar und servicefreundlich ist und der bei Bedarf wirtschaftlich an veränderte Durchflusskapazitäten angepasst werden kann.

Diese Aufgabe wird erfindungsgemäß mit einem Kompaktplattenwärmeübertrager der eingangs genannten Art dadurch gelöst, dass die Gewindespannelemente an einem Ende mit einem Linksgewinde und am anderen Ende mit einem Rechtsgewinde ausgebildet und in korrespondierende Gewindebohrungen in der Spannscheibe und korrespondierende Gewindebohrungen in der Mentelplatte eindrehbar sind, dass die Mantelschale beiderseits in umlaufend ausgebildeten Führungsnuten von begrenzenden Mantelplatten dichtend arretiert und gemeinsam mit den Mantelplatten mit mindestens zwei diagonal gegenüberliegenden Spannbolzen zu einem druckstabilen Gehäusemantel verspannt ist, dass zwischen der Spannscheibe und der Mantelplatte ein elastisches Ausgleichselement in Form eines Drahtgeflechtes vorgesehen ist, und dass die geschlossene Mantelschale einen Innendurchmesser aufweist, der größer als der Außendurchmesser des Plattenpaketes ist, so dass sich zwischen dem Plattenpaket und dem Innendurchmesser der geschlossenen Mantelschale ein freier umlaufender Spalt ausbildet, der den mantelseitigen Einströmungsbereich für das Plattenpaket bildet.

Durch die gemeinsame Verspannung der von den Anschlussstutzen durchdrungenen Endplatte mit dem Plattenpaket zwischen der Spannplatte und einer Endplatte angrenzenden Mantelplatte des Gehäusemantels hat sich überraschend gezeigt, dass beim Betrieb des Kompaktplattenwärmeübertragers die wirkenden Plattenkräfte und Mantelkräfte nicht mehr ausschließlich über den Gehäusemantel aufgenommen werden, sondern die weitaus wirkenden größeren Plattenkräfte zum größten Teil über die Spannplatte, die Endplatte und die Gewindespannelemente und die wesentlich geringer wirkenden Kräfte über den Gehäusemantel, der damit annähernd spannungsfrei gehalten wurde. Damit ist die Voraussetzung gegeben, dass ein Kompaktplattenwärmeübertrager, der bis in den Hochdruckbereich einsetzbar ist, konstruktiv mit einem verschraubten Gehäusemantel ausgelegt werden kann, der wirtschaftlich herstellbar und für Servicearbeiten vollständig zerlegbar ist. Vielmehr, durch die erfindungsgemäße Ausbildung des Kompaktplattenwärmeübertragers in der verschraubten Ausführungsart kann bereits ein vorhandener Kompaktplattenwärmeübertrager bei Bedarf sehr variabel und wirtschaftlich an veränderte Durchflusskapazitäten angepasst werden. Zu diesem Zweck sind lediglich die geschlossenen Mantelschale, die Gewindespannelemente sowie die Spannbolzen zum Verspannen der Mantelplatten auszutauschen und das Plattenpaket durch entsprechende Plattenpaare zu erweitern oder das Plattenpaket mit einem Plattenpaket auszutauschen, das der entsprechenden Durchsatzleistung entspricht.

Mit diesem Ausgleichselement werden zum einen nicht in jedem Fall vermeidbare Druckstöße im Plattenpaket annähernd kompensiert aber mindestens gedämpft auf die angrenzende Mantelplatte übertragen und zum anderen wird eine noch mögliche Bypass-Strömung zwischen der Spannscheibe und der angrenzenden Mantelplatte des mantelseitig einströmenden Mediums weitgehend unterbunden. Durch den bevorzugten Einsatz eines Drahtgeflechts als Ausgleichselement ist gewährleistet, dass das Ausgleichselement hitzebeständig und der Kompaktplattenwärmeübertrager auch im Hochtemperaturbereich geeignet ist.

Nach einer weiteren bevorzugten Ausführungsform der Erfindung sind die Enden der Anschlussstutzen, die die Endplatte durchdringen, mit der Endplatte und den Durchtrittsöffnungen des angrenzenden Plattenpaares am Umfang gasdicht verschweißt. Damit ist eine sichere metallische und damit eine temperaturbeständige und servicefreie Abdichtung im Einströmungsbereich gewährleistet.

Um eine Bypass-Strömung des mantelseitig einströmenden Mediums zwischen der Endplatte und der angrenzenden Mantelplatte und der Spannscheibe zu vermeiden, sind zwischen der Mantelschale und dem umlaufenden Durchmesser der Spannscheibe sowie dem umlaufenden Durchmesser der Endplatte metallische Dichtungselemente eingesetzt.

Damit im Plattenpaket die notwendige Druckstabilität gewährleistet wird, ist bevorzugt das Plattenpaket, die Spannscheibe und die Endplatte mit mehrfach diagonal gegenüberliegenden und auf einem Lochkreis gleichmäßig versetzten Gewindespannelementen verspannt sowie die Mantelschale mit den begrenzenden beiden Mantelplatten mit mehrfach diagonal gegenüberliegenden und auf einem gleichen Lochkreis gleichmäßig versetzten Spannbolzen verspannt. Die Anzahl der einzusetzenden Gewindespanneleente und der Spannbolzen wird dabei aus dem vorgesehenen Druckbereich, in dem ein Kompaktplattenwärmeübertrager eingesetzt werden soll, ermittelt und kann somit von Fall zu Fall sowohl für die Gewindespannelemente als auch für die Spannelemente verschieden sein. Folglich kann auf diese Weise der technologische Aufwand zur Herstellung eines Kompaktplattenwärmeübertragers in Abhängigkeit des gewünschten Druckbereichs kostengünstig angepasst werden.

Die erfinderische Grundkonzeption ist sowohl für Kompaktplattenwärmeübertrager mit einem Plattenpaket aus runden als auch aus rechteckigen Wärmeübertragungsplatten geeignet und kann bei beiden Ausführungsformen für den Hochdruckbereich sehr kostengünstig und mit einem minimalen technologischen Aufwand genutzt werden.

Weitere Einzelheiten der Erfindung ergeben sich aus der nachfolgenden ausführlichen Beschreibung und den beigefügten Zeichnungen, in denen beispielsweise ein Kompaktplattenwärmeübertrager mit einem Plattenpaket gezeigt ist, das aus runden Wärmeübertragungsplatten besteht.

In den Zeichnungen zeigen:
- Fig. 1:: einen Schnitt durch einen schematisch dargestellten Kompaktplattenwärmeübertrager,

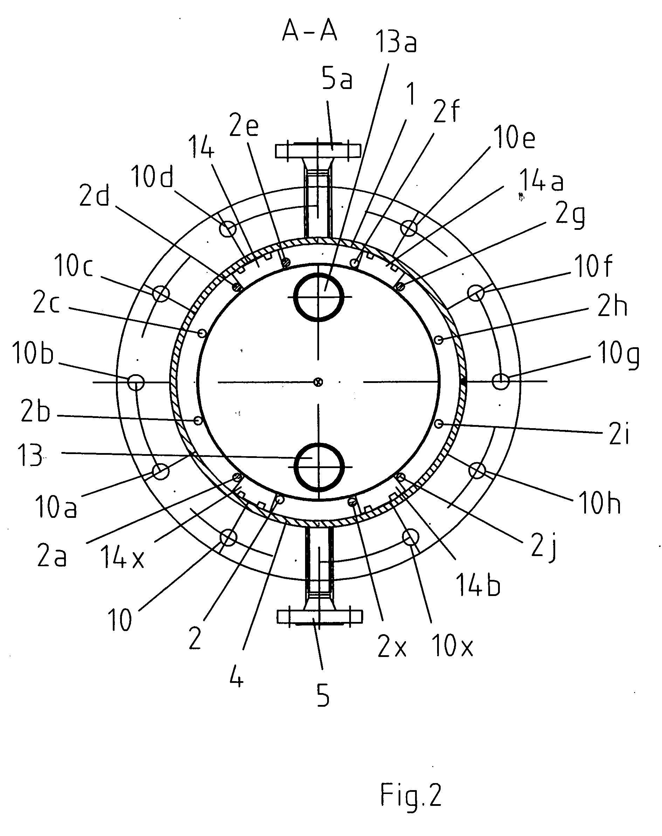

- Fig. 2:: einen Schnitt A-A von Fig. 1,

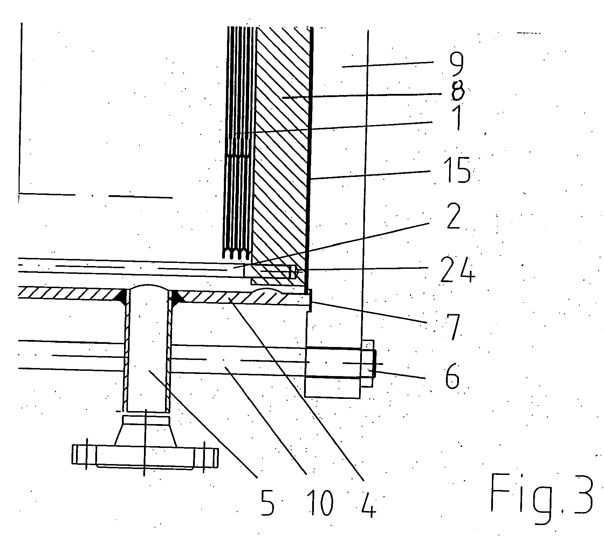

- Fig. 3:: eine Detaildarstellung mit einem Ausgleichselement zwischen der Spannscheibe und der angrenzenden Mantelplatte,
- Fig. 4:: eine schematische Darstellung eines verschweißten Plattenpakets.

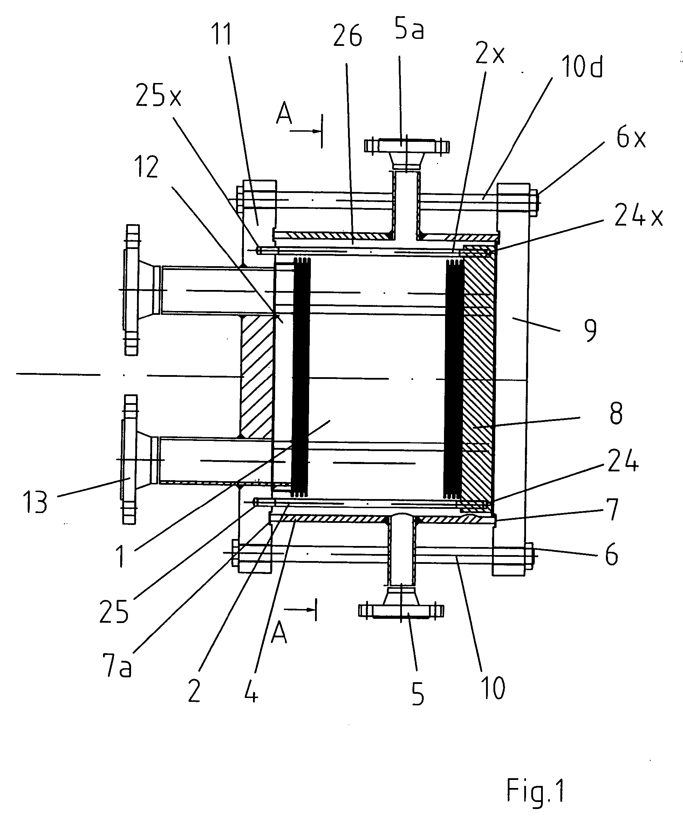

Wie aus Fig. 1 ersichtlich, besteht ein Kompaktplattenwärmeübertrager aus einem Plattenpaket 1, zwei Mantelplatten 9,10, einem Gehäusemantel, der von einer geschlossenen Mantelschale 4 mit Mantelstutzen 5, 5a , einer Spannscheibe 8, einer Endplatte gebildet wird, Gewindespannelementen 2-2x, Spannbolzen 10- 10x und den Anschlussstutzen 13, 13a.

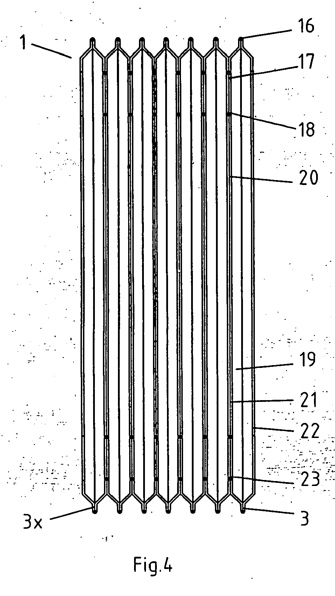

Ein Plattenpaket 1, wie in Fig. 4 gezeigt, besteht in diesem Fall aus runden Wärmeübertragungsplatten 21, 22, mit einer identischen Profilierung, die in der eigenen Ebene um 180° relativ zueinander gedreht und am Umfang 18 der Durchtrittsöffnungen 17, 23 gasdicht zu einem Plattenpaar 3;3x verschweißt sind und somit einen Plattenzwischenraum 20 für den mantelseitigen Durchfluss des einen Mediums bilden, wobei das Plattenpaar 3-3x wiederum um die eigene Ebene um 180° relativ zum anderen Plattenpaar 3-3x gedreht und entlang der Peripherie 16 von jeweils zwei aneinander gefügten Plattenpaaren 3,3x gasdicht zum Plattenpaket 1 verschweißt sind und somit einen Plattenzwischenraum 19 für den Durchfluss eines zweiten Mediums über die Durchtrittsöffnungen 23 ausbilden.

Das Plattenpaket 1 ist zwischen einer Endplatte 12 und einer Spannscheibe 8 über am Umfang des Plattenpakets 1 verlaufende Gewindespannelemente 2-2x verspannt, die einerseits in der Spannscheibe 8 und andererseits in einer Mantelplatte 11 eingeschraubt sind.

Der das Plattenpaket 1 umgebende Gehäusemantel besteht aus einer am Umfang geschlossen ausgebildeten Mantelschale 4 mit gasdicht verschweißten Mantelstutzen 5-5a für das mantelseitige einströmende Medium, die beiderseits gedichtet in einer umlaufenden Führungsnut 7 einer Mantelplatte 9 und einer umlaufenden Führungsnut 7a einer Mantelplatte 11 arretiert ist und die zwischen den Mantelplatten 9,11 mittels Spannbolzen 10-10x mit Verschraubungen 6-6x zu einem druckstabilen Gehäusemantel verspannt ist.

Die geschlossene Mantelschale 4 weist dabei einen Innendurchmesser auf, der größer als der Außendurchmesser des Plattenpakets 1 ist, so dass zwischen dem Plattenpaket 1 und dem Innendurchmesser der geschlossenen Mantelschale 4 ein freier umlaufender Spalt 26 sich ausbildet, der gleich den mantelseitigen Einströmungsbereich für das Plattenpaket 1 bildet.

Das Plattenpaket 1 ist auf der einen Seite von einer Endplatte 12 begrenzt, die einen Durchmesser aufweist, der annähernd dem Durchmesser des Plattenpakets 1 entspricht und die von Anschlussstutzen 13,13a zum Durchströmen des Plattenpakets 1 über die Durchtrittsöffnungen 23 der Wärmeübertragungsplatten 21,22 durchdrungen ist und die mit der Endplatte 12 und mit den angrenzenden Durchtrittsöffnungen 23 des angrenzenden Plattenpaares 3 am Umfang gasdicht verschweißt sind.

Auf der anderen Seite ist das Plattenpaket 1 von einer Spannscheibe 8 begrenzt, die einen Durchmesser aufweist, der grösser als der Durchmesser des Plattenpakets 1 aber kleiner als der Innendurchmesser der geschlossenen Mantelschale 4 ist.

Im freien Bereich der Spannscheibe 8, der zwischen dem Innendurchmesser der geschlossenen Mantelschale 4 und dem Durchmesser des Plattenpakets 1 liegt, sind in der Spannscheibe 8 auf einem gemeinsamen Lochkreis gleichmäßig versetzt und diagonal gegenüberliegende Gewindebohrungen 24-24x mit einem Links- bzw. Rechtsgewinde vorgesehen.

Deckungsgleich zu den Gewindebohrungen 24-24x der Spannscheibe 8 sind in der Mantelplatte 11 ebenfalls auf einem gemeinsamen Lochkreis gleichmäßig versetzte und diagonal gegenüberliegende Gewindebohrungen 25,25x mit einem Rechts- bzw. Linksgewinde vorgesehen.

In die Gewindebohrungen 24,24x der Spannscheibe und die Gewindebohrungen 25,25x der Mantelplatte 11 werden die Gewindespannelemente 2-2x mit zu den Gewindebohrungen 24-24x bzw. 25-25x korrespondierenden Gewinden eingesetzt und anschließend das Plattenpaket 1 mit den Gewindespannelementen 2-2x zwischen der Endplatte 12 und der Spannscheibe 8 druckstabil verspannt.

Zur Vermeidung einer Bypass-Strömung des mantelseitig einströmenden Mediums sind zwischen dem Umfang der Spannscheibe 8 und der Mantelschale 4 sowie der Endplatte 12 und der Mantelschale 4 Dichtungselemente 14 eingesetzt, die bevorzugt metallisch sind.

Zum Ausgleich von möglichen Druckschlägen im Plattenpaket 1 ist zwischen der Mantelplatte 9 und der Spannscheibe 8 ein elastisches Ausgleichselement 15 vorgesehen, das bevorzugt ein Drahtgeflecht ist, das sich beim Verspannen der Mantelplatten 9,11 mit der Mantelschale 4 gleichzeitig dichtend so verformt, dass eine noch mögliche Bypass-Strömung des mantelseitig einströmenden Mediums annähernd ausgeschlossen werden kann.

Die erfindungsgemäße Grundkonzeption für einen Kompaktplattenwärmeübertrager, die vorstehend an einem Kompaktplattenwärmeübertrager mit einem gattungsgemäßen Plattenpaket 1 aus paarweise verschweißten runden Wärmeübertragungsplatten 21, 22 beschrieben ist, kann auch konzeptionell für Kompaktplattenwärmeübertrager mit einem gattungsgemäßen Plattenpaket 1 genutzt werden, das aus paarweise verschweißen rechteckigen oder quadratischen Wärmeübertragungsplatten 21,22 besteht.

### Bezugszeichen

- 1: Plattenpaket
- 2 - 2x: Gewindespannelement
- 3 - 3x: Plattenpaar
- 4: Mantelschale
- 5, 5a: Mantelstutzen
- 6 - 6x: Verschraubung
- 7, 7a: gedichtete Führungsnut
- 8: Spannscheibe
- 9: Mantelplatte
- 10 - 10x: Spannbolzen
- 11: Mantelplatte
- 12: Endplatte
- 13, 13a: Anschlussstutzen
- 14 - 14x: Dichtungselemente
- 15: Ausgleichselement
- 16: Peripherie der Wärmeübertragungsplatte
- 17: Durchtrittsöffnungen
- 18: Umfang der Durchtrittsöffnungen
- 19: Plattenzwischenraum zwischen 2 Plattenpaaren
- 20: Plattenzwischenraum im Plattenpaar
- 21: Wärmeübertragungsplatte
- 22: Wärmeübertragungsplatte
- 23: Durchtrittsöffnung
- 24 - 24x: Gewindebohrung Spannscheibe
- 25 - 25x: Gewindebohrung Mantelplatte
- 26: umlaufender Spalt

## Patentansprüche

1. Kompaktplattenwärmeübertrager für die Wärmeübertragung zwischen zwei Medien eines gleichen oder unterschiedlichen Aggregatzustandes mit einem Plattenpaket (1), das aus runden oder rechteckigen profilierten Wärmeübertragungsplatten (21; 22) mit Durchtrittsöffnungen (23) besteht, wobei jeweils zwei aneinander gefügte Wärmeübertragungsplatten (21, 22) am Umfang (18) ihrer Durchtrittsöffnungen (23) gasdicht zu einem Plattenpaar (3) verschweißt sind, die einen Plattenzwischenraum (20) für den mantelseitigen Durchfluss von einem ersten Medium bilden und mindestens zwei aneinander gefügte Plattenpaare (3-3x) an ihrer Peripherie (16) gasdicht zu einem kompakten Plattenpaket (1) verschweißt sind, die einen Plattenzwischenraum (19) für den Durchfluss eine zweiten Mediums über die Durchtrittsöffnungen (23) bilden und wobei das Plattenpaket (1) in einem druckstabilen und gasdicht geschlossenen Gehäusemantel mit Anschlussstutzen (5, 5a; 13, 13a) eingelagert ist, über die die getrennten Plattenzwischenräume (19; 20) des Plattenpakets (1) von einem ersten Medium mantelseitig und von einem zweiten Medium über die Durchtrittsöffnungen (23) angeströmt werden, wobei das Plattenpaket (1) gemeinsam mit einer vom Anschlussstutzen (13, 13a) durchdrungenen und gegenüber dem Plattenpaket (1) gedichteten Endplatte (12) zwischen einer Spannscheibe (8) und einer Mantelplatte (11) des Gehäusemantels mit mindestens zwei am Umfang des Plattenpakets (1) verlaufenden und diagonal gegenüberliegenden Gewindespannelementen (2-2x) verspannt ist, wobei das Plattenpaket (1) von einer am Umfang geschlossenen Mantelschale (4) umgeben ist, **dadurch gekennzeichnet,**
**dass** die Gewindespannelemente (2, 2x) an einem Ende mit einem Linksgewinde und am anderen Ende mit einem Rechtsgewinde ausgebildet und in korrespondierende Gewindebohrungen (24, 24x) in der Spannscheibe (8) und korrespondierende Gewindebohrungen (25, 25x) in der Mentelplatte (11) eindrehbar sind,
**dass** die Mantelschale (4) beiderseits in umlaufend ausgebildeten Führungsnuten (7, 7a) von begrenzenden Mantelplatten (11, 9) dichtend arretiert und gemeinsam mit den Mantelplatten (11, 9) mit mindestens zwei diagonal gegenüberliegenden Spannbolzen (10, 10x) zu einem druckstabilen Genäusemantel verspannt ist,
**dass** zwischen der Spannscheibe (8) und der Mantelplatte (9) ein elastisches Ausgleichselement (15) in Form eines Drahtgeflechtes vorgesehen ist, und
**dass** die geschlossene Mantelschale (4) einen Innendurchmesser aufweist, der größer als der Außendurchmesser des Plattenpaketes (1) ist, so dass sich zwischen dem Plattenpaket (1) und dem Innendurchmesser der geschlossenen Mantelschale (4) ein freier umlaufender Spalt (26) ausbildet, der den mantelseitigen Einströmungsbereich für das Plattenpaket (1) bildet.

2. Kompaktplattenwärmeübertrager nach Anspruch 1, **dadurch gekennzeichnet, dass** die Enden der Anschlusstutzen (13; 13a), die die Endplatte durchdringen, mit der Endplatte (12) und den Durchtrittsöffnungen (23) des angrenzenden Plattenpaares (1) am Umfang gasdicht verschweißt sind.

3. Kompaktplattenwärmeübertrager nach Anspruch 1, **dadurch gekennzeichnet, dass** zwischen der Mantelschale (4) und dem umlaufenden Durchmesser der Spannscheibe (8) sowie dem umlaufenden Durchmesser der Endplatte (12) metallische Dichtungselemente (14) eingesetzt sind.

4. Kompaktplattenwärmeübertrager nach einem der Ansprüche 1 bis 3, **dadurch gekennzeichnet, dass** das Plattenpaket (1), die Spannscheibe (8) und die Endplatte (12) mit mehrfach diagonal gegenüberliegenden und auf einem Lochkreis gleichmäßig versetzten Gewindespannelementen (2-2x) miteinander verspannt sind.

5. Kompaktplattenwärmeübertrager nach einem der Ansprüche 1 bis 4, **dadurch gekennzeichnet, dass** die Mantelschale (4) mit den begrenzenden Mantelplatten (11, 9) mit mehrfach diagonal gegenüberliegenden und auf einem Lochkreis gleichmäßig versetzten Spannbolzen (10, 10x) verspannt ist.

6. Kompaktplattenwärmeübertrager nach einem der Ansprüche 1 bis 5, **dadurch gekennzeichnet, dass** mindestens die das Plattenpaket (1) bildenden Wärmeübertragungsplatten (21; 22), die Spannscheibe 88), die Endplatte (12), das Ausgleichselement (15) sowie die geschlossene Mantelschale (4) eine runde Form aufweisen.

7. Kompaktplattenwärmeübertrager nach einem der Ansprüche 1 bis 5, **dadurch gekennzeichnet, dass** die das Plattenpaket (1) bildenden Wärmeübertragungsplatten (21; 22), die Spannscheibe (8), die Endplatte (12), das Ausgleichselement (15), die geschlossene mantelschale (4) sowie die Mantelplatten (9, 11) eine rechteckige Form aufweisen.

## Claims

1. Compact plate heat-transfer device for transferring heat between two media of an identical or non-identical aggregate state, having a plate pack (1) which is composed of round-profile or rectangular-profile heat-transfer plates (21; 22) having through openings (23), wherein two heat-transfer plates (21, 22) which are in each case joined together and which on the circumference (18) of the through openings (23) thereof form an intermediate plate space (20) for the flow-through on the shell side of a first medium, are welded in a gas-tight manner to form a plate pair (3), and at least two plate pairs (3-3x) which are joined together and which form an intermediate plate space (19) for the flow-through of a second medium via the through openings (23), on the periphery (16) thereof, are welded in a gas-tight manner to form a compact plate pack (1), and wherein the plate pack (1) is mounted in a housing shell which is stable in relation to pressure and closed in a gas-tight manner, and which has connector pieces (5, 5a; 13, 13a) by way of which the separated intermediate plate spaces (19; 20) of the plate pack (1) receive the flow of a first medium on the shell side, and the flow of a second medium via the through openings (23), wherein the plate pack (1), collectively with an end plate (12) which is penetrated by the connector piece (13, 13a) and is sealed in relation to the plate pack (1), is braced by at least two threaded tensioning elements (2-2x), which run on the circumference of the plate pack (1) and lie diagonally opposite, between a tension disc (8) and a shell plate (11) of the housing shell, wherein the plate pack (1) is surrounded by a shell case (4) which is closed on the circumference,
**characterized in**
**that** the threaded tensioning elements (2, 2x) at one end are configured having a left-handed thread and at the other end having a right-handed thread, and are capable of being driven into corresponding threaded bores (24, 24x) in the tension disc (8) and into corresponding threaded bores (25, 25x) in the shell plate (11),
**that** the shell case (4) on both sides is locked in a sealing manner in guide grooves (7, 7a), of delimiting shell plates (11, 9), which guide grooves are configured in an encircling manner, and which shell case collectively with the shell plates (11, 9) is braced by at least two diagonally opposite tension bolts (10, 10x) to form a housing shell which is stable in relation to pressure,
**that** an elastic compensation element (15) in the form of a wire mesh is provided between the tension disc (8) and the shell plate (9), and
in that the closed shell case (4) has an internal diameter which is larger than the external diameter of the plate pack (1), such that a free encircling gap (26) which forms the shell-side inflow region for the plate pack (1) is configured between the plate pack (1) and the internal diameter of the closed shell case (4).

2. Compact plate heat-transfer device according to Claim 1, **characterized in that** ends of the connector pieces (13; 13a) that penetrate the end plate, are welded in a gas-tight manner to the endplate (12) and to the through openings (23) of the adjacent plate pair (1) on the circumference.

3. Compact plate heat-transfer device according to Claim 1, **characterized in that** metallic sealing elements (14) are inserted between the shell case (4) and the encircling diameter of the tension disc (8) as well as the encircling diameter of the end plate (12).

4. Compact plate heat-transfer device according to one of Claims 1 to 3, **characterized in that** the plate pack (1), the tension disc (8), and the end plate (12) are mutually braced by multiple diagonally opposite threaded tensioning elements (2-2x) which are offset in a uniform manner on a pitch circle.

5. Compact plate heat-transfer device according to one of Claims 1 to 4, **characterized in that** the shell case (4) having the delimiting shell plates (11, 9) are braced by multiple diagonally opposite tension bolts (10, 10x) which are offset in a uniform manner on a pitch circle.

6. Compact plate heat-transfer device according to one of Claims 1 to 5, **characterized in that** at least those heat transfer plates (21; 22) that form the plate pack (1), the tension disc (8), the end plate (12), the compensation element (15), and the closed shell case (4) have a round shape.

7. Compact plate heat-transfer device according to one of Claims 1 to 5, **characterized in that** those heat transfer plates (22; 21) that form the plate pack (1), the tension disc (8), the end plate (12), the compensation element (15), the closed shell case (4), and the shell plates (9, 11) have a rectangular shape.

## Revendications

1. Échangeur de chaleur à plaques compact pour le transfert de chaleur entre deux milieux d'un état de phase identique ou différent, comprenant un paquet de plaques (1) qui se compose de plaques de transfert thermique profilées rondes ou rectangulaires (21 ; 22) avec des ouvertures de passage (23), deux plaques de transfert thermique assemblées l'une à l'autre (21, 22) étant à chaque fois soudées au niveau de la périphérie (18) de leurs ouvertures de passage (23) de manière étanche aux gaz pour former une paire de plaques (3), qui forment un espace intermédiaire de plaque (20) pour la circulation, du côté de l'enveloppe, d'un premier milieu et au moins deux paires de plaques assemblées l'une à l'autre (3-3x) étant soudées au niveau de leur périphérie (16) de manière étanche pour former un paquet de plaques compact (1), lesquelles forment un espace intermédiaire de plaque (19) pour la circulation d'un deuxième milieu par le biais des ouvertures de passage (23) et le paquet de plaques (1) étant incorporé dans une enveloppe de boîtier stable vis-à-vis de la pression et fermée de manière étanche aux gaz avec des tubulures de raccordement (5, 5a ; 13, 13a), par le biais desquelles les espaces intermédiaires de plaques séparés (19 ; 20) du paquet de plaques (1) sont parcourus par l'écoulement d'un premier milieu du côté de l'enveloppe et par un deuxième milieu par le biais des ouvertures de passage (23), le paquet de plaques (1) étant serré, conjointement avec une plaque d'extrémité (12) traversée par la tubulure de raccordement (13, 13a) et étanchéifiée par rapport au paquet de plaques (1), entre un disque de serrage (8) et une plaque d'enveloppe (11) de l'enveloppe de boîtier avec au moins deux éléments de serrage filetés (2-2x) s'étendant sur la périphérie du paquet de plaques (1) et diagonalement opposés, le paquet de plaques (1) étant entouré par une coque d'enveloppe (4) fermée au niveau de la périphérie, **caractérisé en ce que** les éléments de serrage filetés (2, 2x) sont réalisés au niveau d'une extrémité avec un filetage à gauche et au niveau de l'autre extrémité avec un filetage à droite et peuvent être vissés dans des alésages filetés correspondants (24, 24x) dans le disque de serrage (8) et des alésages filetés correspondants (25, 25x) dans la plaque d'enveloppe (11),
**en ce que** la coque d'enveloppe (4) est bloquée de manière étanche des deux côtés dans des rainures de guidage réalisées sur la périphérie (7, 7a) par des plaques d'enveloppe de limitation (11, 9) et est serrée conjointement avec les plaques d'enveloppe (11, 9) avec au moins deux boulons de serrage (10, 10x) diagonalement opposés pour former une enveloppe de boîtier stable vis-à-vis de la pression,
**en ce qu'**entre le disque de serrage (8) et la plaque d'enveloppe (9) est prévu un élément de compensation élastique (15) sous la forme d'un treillis de fils métalliques, et
**en ce que** la coque d'enveloppe fermée (4) présente un diamètre intérieur qui est supérieur au diamètre extérieur du paquet de plaques (1) de telle sorte qu'entre le paquet de plaques (1) et le diamètre intérieur de la coque d'enveloppe fermée (4) soit réalisé un interstice périphérique libre (26) qui forme la région d'afflux du côté de l'enveloppe pour le paquet de plaques (1).

2. Échangeur de chaleur à plaques compact selon la revendication 1, **caractérisé en ce que** les extrémités des tubulures de raccordement (13 ; 13a) qui traversent la plaque d'extrémité sont soudées de manière étanche aux gaz au niveau de la périphérie avec la plaque d'extrémité (12) et les ouvertures de passage (23) de la paire de plaques adjacentes (1).

3. Échangeur de chaleur à plaques compact selon la revendication 1, **caractérisé en ce qu'**entre la coque d'enveloppe (4) et le diamètre périphérique du disque de serrage (8) ainsi que le diamètre périphérique de la plaque d'extrémité (12) sont insérés des éléments d'étanchéité métalliques (14).

4. Échangeur de chaleur à plaques compact selon l'une quelconque des revendications 1 à 3, **caractérisé en ce que** le paquet de plaques (1), le disque de serrage (8) et la plaque d'extrémité (12) sont serrés ensemble avec des éléments de serrage filetés (2-2x) opposés plusieurs fois en diagonale et décalés uniformément sur un cercle de trous.

5. Échangeur de chaleur à plaques compact selon l'une quelconque des revendications 1 à 4, **caractérisé en ce que** la coque d'enveloppe (4) est serrée avec les plaques d'enveloppe de limitation (11, 9) avec des boulons de serrage (10, 10x) opposés plusieurs fois en diagonale et décalés uniformément sur un cercle de trous.

6. Échangeur de chaleur à plaques compact selon l'une quelconque des revendications 1 à 5, **caractérisé en ce qu'**au moins les plaques de transfert thermique (21 ; 22) formant le paquet de plaques (1), le disque de serrage (8), la plaque d'extrémité (12), l'élément de compensation (15) ainsi que la coque d'enveloppe fermée (4) présentent une forme ronde.

7. Échangeur de chaleur à plaques compact selon l'une quelconque des revendications 1 à 5, **caractérisé en ce que** les plaques de transfert thermique (21 ; 22) formant le paquet de plaques (1), le disque de serrage (8), la plaque d'extrémité (12), l'élément de compensation (15), la coque d'enveloppe fermée (4) ainsi que les plaques d'enveloppe (9, 11) présentent une forme rectangulaire.
